# EUROPÄISCHE PATENTSCHRIFT

(11) **EP 2 003 014 B1**
(45) Veröffentlichungstag und Bekanntmachung des Hinweises auf die Patenterteilung: **14.09.2011**
(21) Anmeldenummer: 08157999.7
(22) Anmeldetag: 11.06.2008
(51) Int. Cl.: B60N 2/22, B60N 2/48

(54) **Fahrzeugsitz mit einem schwenkbaren Schulter- und Kopfbereich**
Vehicle seat with a pivotable shoulder and head area
Siège de véhicule doté d'une zone d'épaule et de tête pivotante

(30) Priorität: 14.06.2007 DE 102007028034
(43) Veröffentlichungstag der Anmeldung: 17.12.2008
(73) Patentinhaber: GRAMMER AG, 92224 Amberg (DE)
(72) Erfinder: Lorey, Alexander, 93142 Maxhütte-Haidhof (DE); Kohl, Josef, 92242 Hirschau (DE)
(74) Vertreter: Hannke, Christian

(56) Entgegenhaltungen:
- WO-A1-97/19727
- DE-A1- 19 917 050
- DE-C1- 10 200 843

## Beschreibung

Die vorliegende Erfindung betrifft einen Fahrzeugsitz laut dem Oberbegriff des Anspruchs 1.

Ein derartiger Fahrzeugsitz ist aus der DE 199 17 050 A1 bekannt.

Derartige Fahrzeugsitze können in einer gewissen Anzahl von Parametern auf die auf dem Sitz sitzende Person eingestellt werden. Dazu gehört neben der Beabstandung des Sitzes vom Lenkrad des Fahrzeugs und der Steilheit der Rückenlehne zum Beispiel auch ein höhenverstellbares Kopfteil. Weiterhin ist es bekannt, beispielsweise auch andere Eigenschaften eines derartigen Sitzes, wie zum Beispiel die Härte des Lendenwirbelbereichs einstellen zu können. Es kann aber für die auf einem derartigen Sitz platznehmende Person auch wünschenswert sein, weitere Eigenschaften eines derartigen Sitzes verstellen zu können. Zudem ist es von Interesse, bei derartigen Sitzen deren Sicherheit sowie Festigkeit sowie außerdem eine komfortable und sichere Gurtführung zu ermöglichen.

Es ist daher die Aufgabe der vorliegenden Erfindung, bei derartigen Fahrzeugsitzen weitere Verstellmöglichkeiten, insbesondere im Schulter- und Kopfbereich vorzusehen, sowie die Sicherheit derartiger Sitze im Allgemeinen und in Bezug auf die dabei vorzunehmende Gurtführung und dessen Komfortabilität zu verbessern.

Die vorliegende Erfindung schlägt zur Lösung bzw. zumindest zur teilweisen Verbesserung dieser Schwierigkeiten und Probleme einen Fahrzeugsitz vor, der insbesondere die im kennzeichnenden Teil des Anspruchs 1 genannten Merkmale aufweist. Ein derartiger Fahrzeugsitz besitzt insbesondere eine Rückenlehne, die einen zusammenhängenden Schulter- und Kopfbereich aufweist, der im Vorderbereich der Rückenlehne die Auflagefläche für die Schulter und den Kopf einer auf dem Sitz sitzenden Person bildet, wobei das untere Ende dieses Schulter- und Kopfbereichs im mittleren Abschnitt der Rückenlehne an deren steifen Rahmen schwenkbar angebracht ist. Dies hat den Vorteil, dass sich die Steilheit des Schulter- und Kopfbereichs unabhängig vom unteren Bereich der Rückenlehne und in einem Vorgang verändern lässt.

Erfindungsgemäß weist der Sitz eine Gurtumlenkung auf, die am steifen Rahmen der Rückenlehne angebracht ist. Dies ist insbesondere wichtig für die Sicherheit und Festigkeit des Sitzes, da eine Verstellung des Schulter- und Kopfbereichs somit auf die Anbringung des Anschnallgurts bzw. insbesondere die Gurtumlenkung keinerlei Einfluss hat. Dadurch ist eine sichere und komfortable Gurtführung möglich.

Weiterhin ist die besagte Gurtumlenkung seitlich am steifen Rahmen der Rückenlehne angebracht. Vor allem kann der schwenkbare Schulter- und Kopfbereich Seitenteile aufweisen. Die Festigung der Gurtumlenkung am steifen Rahmen der Rückenlehne kann in diesem Fall mittels zumindest eines Befestigungsstifts am Seitenbereich dieses steifen Rahmens erfolgen. An dem Seitenteil, das der Gurtumlenkung benachbart liegt, ist dann zumindest eine entsprechende Durchgangsöffnung für diese Befestigungsstifte vorgesehen, um die Schwenkbewegung des Schulter- und Kopfbereichs des Sitzes zu erlauben.

Ferner weist der Fahrzeugsitz Mittel zur Begrenzung der Schwenkbewegung des Schulter- und Kopfbereichs des Sitzes sowohl in Vorwärtsrichtung als auch in Rückwärtsrichtung auf. Insbesondere können die Mittel zur Begrenzung der Schwenkbewegung zumindest einen am hinteren Bereich des Schulter- und Kopfbereichs befestigten Haltebügel aufweisen, die einen am steifen Rahmen der Rückenlehne angebrachten Querbalken umgreifen, wobei bei vollständiger Schwenkbewegung des Schulter- und Kopfbereichs des Sitzes in Rückwärtsrichtung dieser selbst an besagtem Querbalken anschlägt, während bei vollständiger Schwenkung des Schulter- und Kopfbereichs des Sitzes in Vorwärtsrichtung die besagten Haltebügel am Querbalken anschlagen.

Dadurch kann die Schwenkbewegung des Schulter- und Kopfbereichs des Sitzes in beiden Richtungen auf einfache Art und Weise begrenzt werden.

Weiterhin ist es bei einem derartigen Fahrzeugsitz in vorteilhafter Weise möglich, die zur Aufrollung des Anschnallgurts benötigte Gurtaufrollvorrichtung entweder im unteren, hinteren Bereich des Sitzes oder an einer B-Säule des den Sitz beherbergenden Fahrzeugs zu befestigen. Auch dies erhöht die Sicherheit für den Benutzer eines derartigen Fahrzeugsitzes und erlaubt eine komfortable und sichere Gurtführung.

Die beiliegenden Abbildungen zeigen einen erfindungsgemäßen Fahrzeugsitz in schematischer und beispielhafter Weise.
- Fig. 1: zeigt eine seitliche Gesamtansicht eines erfindungsgemäßen Fahrzeugsitzes;
- Fig. 2a: zeigt eine Vorderansicht eines derartigen Fahrzeugsitzes, wobei der schwenkbare Schulter- und Kopfbereich in zwei Positionen eingezeichnet ist;
- Fig. 2b: ist eine perspektivische Ansicht von vorne seitlich auf einen erfindungsgemäßen Fahrzeugsitz, wobei wiederum zwei Positionen des schwenkbaren Schulter- und Kopfbereichs eingezeichnet sind;
- Fig. 3a: zeigt einen erfindungsgemäßen Fahrzeugsitz von der Seite her gesehen, wobei der Schulter- und Kopfbereich nach hinten geklappt ist;
- Fig. 3b: ist eine zu Fig. 3a analoge Ansicht, wobei der schwenkbare Schulter- und Kopfbereich nach vorne geklappt ist;
- Fig. 4a: ist eine schematische perspektivische Ansicht von hinten auf einen erfindungsgemäßen Fahrzeugsitz, wobei der schwenkbare Schulter- und Kopfbereich nach hinten geklappt ist, und wo, wie in den vorhergehenden Abbildungen wiederum nur der Rückenlehnenbereich dargestellt ist; und
- Fig. 4b: ist eine zu Fig. 4a analoge perspektivische Ansicht, wobei der schwenkbare Schulter- und Kopfbereich nach vorne geklappt ist.

Im Folgenden wird die vorliegende Erfindung unter Verweis auf die oben genannten Abbildungen im Detail beschrieben werden.

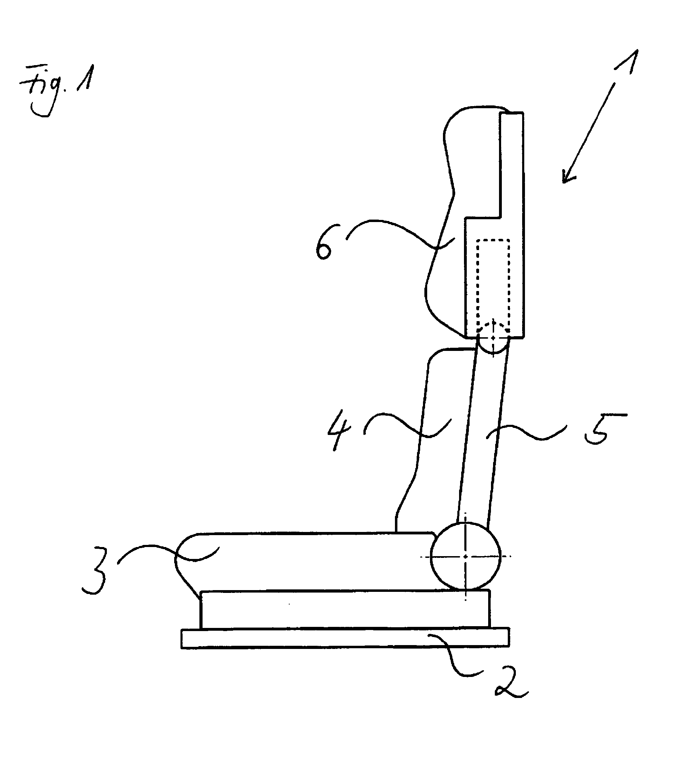

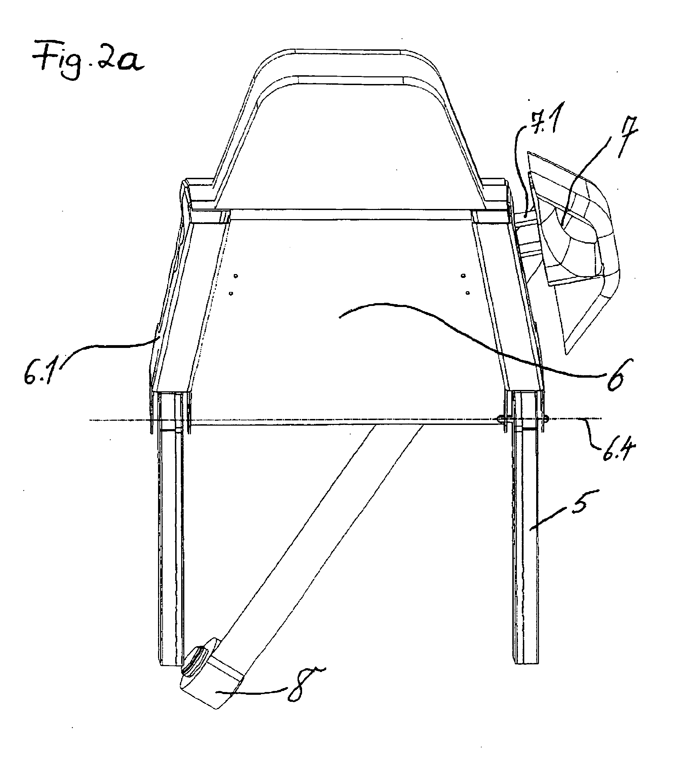

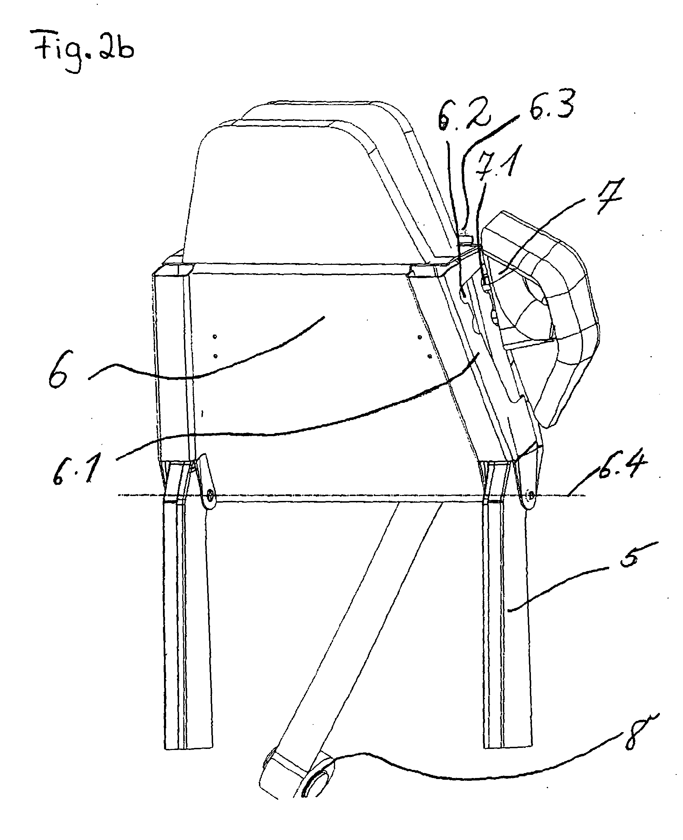

Wie dies der Figur 1 zu entnehmen ist, weist ein erfindungsgemäßer Fahrzeugsitz 1 ein Sitzteil 3 sowie eine Rückenlehne 4 auf, wobei das Sitzteil 3 zur Positionsverstellung des Sitzes gegenüber einem Grundrahmen, der an dem den Sitz beherbergenden Fahrzeug befestigt ist, im Wesentlichen horizontal in Vorwärts- und Rückwärtsrichtung verschiebbar ist, um beispielsweise den Abstand zum Lenkrad des Fahrzeugs zu regeln. Die Rückenlehne 4 eines erfindungsgemäßen Fahrzeugsitzes 1 ist zur Veränderbarkeit ihrer Steilheit an ihrem unteren Ende schwenkbar. Wie bei derartigen Fahrzeugsitzen üblich, ist es der auf dem Sitz sitzenden Person dadurch möglich, die Rückenlehne ihren Bedürfnissen anzupassen. So wie dies aus den Figuren 2a und 2b ersichtlich ist, weist nun ein erfindungsgemäßer Fahrzeugsitz insbesondere eine Rückenlehne auf, die einen zusammenhängenden Schulter- und Kopfbereich 6 oder einen Kopfbereich besitzt, der im Vorderbereich der Rückenlehne 4 die Auflagefläche für die Schulter und/oder den Kopf der auf dem Sitz 1 sitzenden Person bildet. Das untere Ende dieses Schulter- und Kopfbereichs 6 ist dabei im mittleren Abschnitt der Rückenlehne 4 an deren steifen Rahmen 5 schwenkbar angebracht. Die Schwenkachse 6.4, an der der Schulter- und Kopfbereich schwenkbar angebracht ist, kann dabei physisch als eine Stange ausgebildet sein, oder an beiden Seiten des steifen Rahmens 5 durch Stifte gebildet werden, oder durch andere gleichwertige Lösungen bereit gestellt werden. Diese Lösung erlaubt es, für die Schulter und den Kopf des Sitzenden eine einzige, zusammenhängende Gesamtfläche zur Verfügung zu stellen, die etwa mittig im Bereich der Rückenlehne 4 je nach den Bedürfnissen dieser Person geschwenkt werden kann.

In diesem Zusammenhang ist es insbesondere von Vorteil, dass ein derartiger Sitz 1 eine am steifen Rahmen 5 der Rückenlehne 4 angebrachte Gurtumlenkung 7 aufweist. Dadurch ist zwar der besagte Schulter- und Kopfbereich 6 im oberen Teil der Rückenlehne 4 schwenkbar beweglich, andererseits wird jedoch die Sicherheit des Anschnallgurts und insbesondere die hierfür notwendige Gurtumlenkung in keiner Weise beeinträchtigt, insofern diese ja im steifen Bereich der Rückenlehne 4 befestigt ist. Auch hinsichtlich des Komforts der Gurtführung weist diese Lösung keinerlei Nachteile im Vergleich zu den vorher üblichen Sitzen auf.

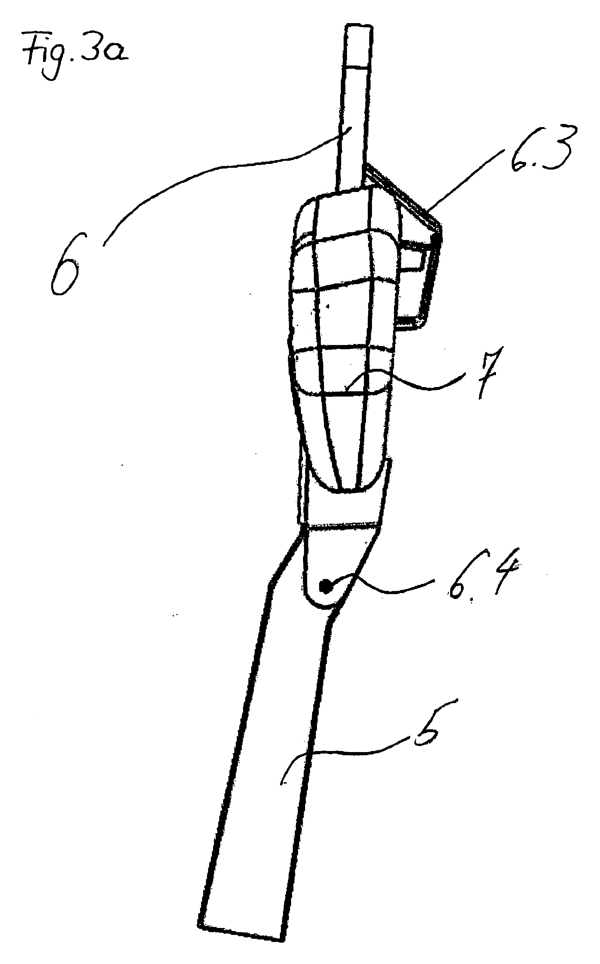

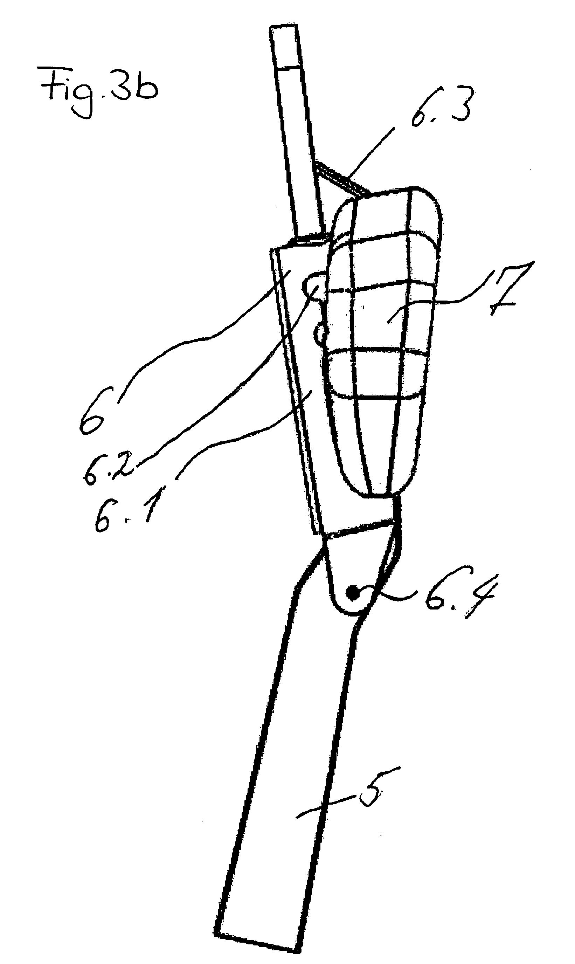

In einer bevorzugten Ausführungsform wird die Gurtumlenkung 7 seitlich am steifen Rahmen 5 der Rückenlehne 4 eines erfindungsgemäßen Fahrzeugsitzes 1 angebracht. Zudem besitzt der schwenkbare Schulter- und Kopfbereich 6 eines derartigen Fahrzeugsitzes normalerweise Seitenteile 6.1, die beispielsweise ebenfalls aus den Figuren 2a und 2b ersichtlich sind. Die Gurtumlenkung 7 ihrerseits kann mittels zumindest eines Befestigungsstifts 7.1 am Seitenbereich des steifen Rahmens 5 der Rückenlehne 4 angebracht werden. In diesem Fall besitzt zumindest das Seitenteil 6.1, das der Gurtumlenkung 7 benachbart liegt, zumindest eine entsprechende Durchgangsöffnung 6.2 für die Befestigungsstifte 7.1, um die Schwenkbewegung des Schulter- und Kopfbereichs 6 des Sitzes 1 zu erlauben. Dies ist in schematischer Weise beispielsweise auch den Figuren 3a und 3b zu entnehmen, die die Rückenlehne 4 eines erfindungsgemäßen Fahrzeugsitzes 1 mit dem schwenkbaren Schulter- und Kopfbereich in nach hinten bzw. nach vorne geklappter Position zeigen. Diesen Figuren ist auch die in etwa mittig an der Rückenlehne 4 liegende Position der Schwenkachse 6.4 sowie die in den beiden Positionen des schwenkbaren Schulter- und Kopfbereichs verschiedene Neigung der Anliegefläche für die Schulter und für den Kopf der auf den Sitz sitzenden Person erkennbar. Hier ist es von Wichtigkeit zu erwähnen, dass bei einem derartigen Fahrzeugsitz 1 diese Anliegefläche von der Schwenkachse 6.4 bis zum oberen Rand der Kopfstütze als zusammenhängende Fläche ausgestaltet werden kann.

Bei einer alternativen Ausführungsform eines erfindungsgemäßen Fahrzeugsitzes 1, deren schwenkbarer Schulter- und Kopfbereich 6 ebenfalls besagte Seitenteile 6.1 aufweist, kann die Gurtumlenkung 7 anstatt mit Befestigungsstiften mittels zumindest eines U-förmigen Teils, dessen offener Bereich in Vorwärtsrichtung des Sitzes 1 gerichtet ist, am Rücken- und/oder Seitenbereich des steifen Rahmens 5 der Rückenlehne 4 angebracht werden. Die Schwenkbewegung des Schulter- und Kopfbereichs 6 des Sitzes 1 ist dadurch möglich, insofern die Seitenteile 6.1 des Schulter- und Kopfbereichs 6 frei im offenen Bereich der U-förmigen Teile beweglich sind. Es lässt sich noch anmerken, dass die Gurtumlenkung 7 normalerweise eine in etwa bogenförmige äußere Abdeckung auf dem inneren, gerundeten eigentlichen Gurtführungsteil aufweist, sowie etwa aus Fig. 2a ersichtlich.

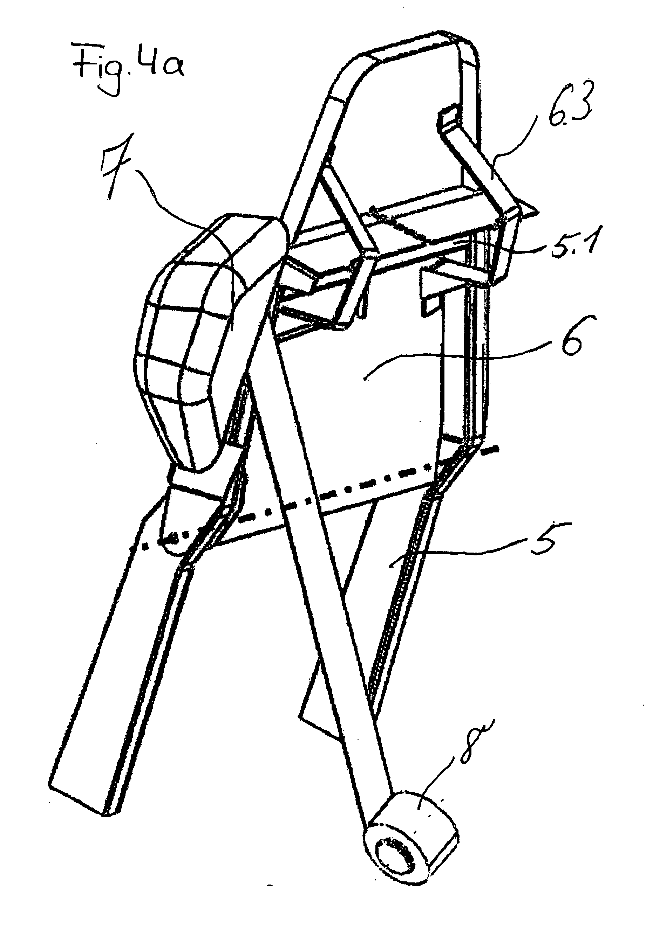

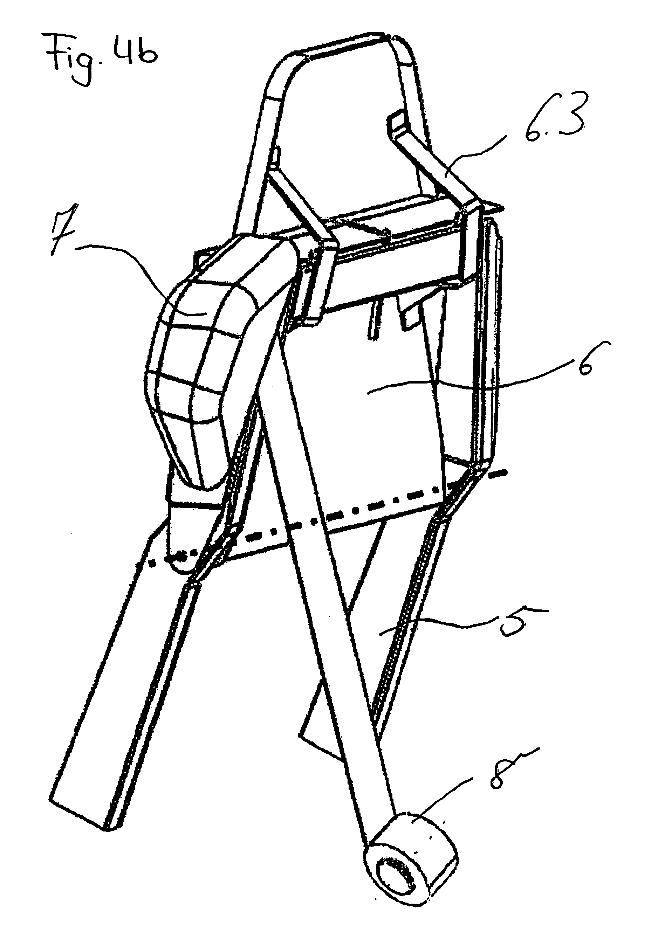

In den Figuren 4a und 4b ist ein erfindungsgemäßer Fahrzeugsitz 1 in perspektivischer Ansicht von der Seite und von hinten dargestellt, wobei aus dieser Ansicht insbesondere hervorgeht, dass ein derartiger Sitz Mittel zur Begrenzung der Schwenkbewegung des Schulter- und Kopfbereichs 6 des Sitzes 1 aufweisen kann. Diese Mittel zur Begrenzung der Schwenkbewegung können aus zumindest einem am hinteren Bereich des Schulter- und Kopfbereichs befestigten Haltebügel 6.3 bestehen, der einen am steifen Rahmen 5 der Rückenlehne 4 angebrachten Querbalken 5.1 umgreift, wobei bei vollständiger Schwenkung des Schulter- und Kopfbereichs 6 des Sitzes 1 in Rückwärtsrichtung dieser selbst an besagtem Querbalken 5.1 anschlägt. Bei vollständiger Schwenkung des Schulter- und Kopfbereichs 6 des Sitzes 1 in Vorwärtsrichtung schlagen hingegen die besagten Haltebügel 6.3 am Querbalken 5.1 an. Alternativ hierzu können die Mittel zur Begrenzung der Schwenkbewegung durch die an den Seitenteilen 6.1 des Schulter- und Kopfbereichs 6 geformten Durchgangsöffnungen 6.2 im Zusammenspiel mit dem durch diese hindurchgehenden Befestigungsstiften 7.1 der Gurtumlenkung 7 gebildet werden. In diesem Falle schlägt der Rand der besagten Durchgangsöffnung 6.2 zum Ende der Schwenkbewegung jeweils an den entsprechenden Befestigungsstift 7.1 der Gurtumlenkung an. In beiden Fällen lässt sich hierdurch eine einfache und effektive Begrenzung der Schwenkbewegung des Schulter- und Kopfbereichs 6 des erfindungsgemäßen Fahrzeugsitzes 1 erreichen.

Wie bei derartigen Fahrzeugsitzen 1 üblich, muss der durch die Gurtumlenkung 7 laufende Gurt mittels einer Gurtaufrollvorrichtung 8 aufrollbar sein. Bei einem erfindungsgemäßen Fahrzeugsitz 1 kann diese Gurtaufrollvorrichtung 8 vorzugsweise im unteren, hinteren Bereich des Sitzes 1 befestigt sein, so wie dies beispielsweise in den Figuren 4a und 4b schematisch angedeutet ist. Alternativ hierzu kann diese Gurtaufrollvorrichtung 8 auch an einer B-Säule des den Sitz 1 beherbergenden Fahrzeugs befestigt werden. In beiden Fällen wird hierdurch eine sichere und komfortable Gurtführung erreicht.

Abschließend sei noch angemerkt, dass ein erfindungsgemäßer Sitz 1 natürlich entsprechende Polsterteile und einen Bezug aufweist, wobei hier Teile im Bereich der Gurtumlenkung wiederum eine entsprechende Öffnung besitzen. Ansonsten sind diese Teile dem Fachmann hinreichend bekannt und erfordert daher keine weiteren Präzisierungen. Es sei lediglich erwähnt, dass hierbei sowohl übliche Polster als auch zum Beispiel pneumatisch gesteuerte Luftkammern zum Einsatz kommen können.

Generell sind als weitere Vorteile eines erfindungsgemäßen Fahrzeugsitzes zu nennen, dass durch die Beibehaltung eines fixen Rahmens an der Rückenlehne deren Festigkeit und Sicherheitstauglichkeit auf dem selben Niveau wie bei üblichen Fahrzeugsitzen gehalten wird, während zugleich sich der Schulter- und Kopfbereich in eine separate Neigungslage bringen lässt. Wie vor dem erwähnt, kann die minimale bzw. maximale Neigung dieses Schulter- und Kopfbereichs mittels geeigneter Mittel begrenzt werden. Dies ist auch in Bezug auf die Sicherheit eines derartigen Fahrzeugsitzes von Belang, insofern dadurch bei einem Unfall der Schulter- und Kopfbereich nicht beliebig bewegt wird. In derartigen Situationen ist insbesondere die Fixierung der Gurtumlenkung am fixen Rahmen der Rückenlehne sehr wichtig, da hierdurch die Sicherheit eines derartigen Sitzes sehr hoch ist. Weiterhin ist zu erwähnen, dass der erfindungsgemäße Sitz eine modulare Bauweise besitzt, die insbesondere den leichten Austausch des schwenkbaren Schulter- und Kopfbereichs favorisiert. Weitere Vorteile ergeben sich aus den Ansprüchen sowie aus der vorstehenden detaillierten Beschreibung der vorliegenden Erfindung.

### Bezugszeichenliste

- 1: Fahrzeugsitz
- 2: Grundrahmen
- 3: Sitzteil
- 4: Rückenlehne
- 5: steifer Rahmen der Rückenlehne
- 6: schwenkbarer Schulter- und Kopfbereich
- 6.1: Seitenteile des schwenkbaren Kopf- und Schulterbereichs
- 6.2: Durchgangsöffnungen
- 6.3: Haltebügel
- 6.4: Schwenkachse
- 7: Gurtumlenkung
- 7.1: Befestigungsstifte der Gurtumlenkung
- 8: Gurtaufrollvorrichtung

## Patentansprüche

1. Fahrzeugsitz (1) mit einem Sitzteil (3) und einer Rückenlehne (4), wobei das Sitzteil (3) zur Positionsverstellung des Sitzes (1) gegenüber einem an dem den Sitz beherbergenden Fahrzeug befestigbaren Grundrahmen (2) im Wesentlichen horizontal in Vorwärts- und Rückwärtsrichtung verschiebbar und die Rückenlehne (4) zur Veränderbarkeit ihrer Steilheit in im Wesentlichen vertikaler Richtung an ihrem unteren Ende schwenkbar ist, die Rückenlehne (4) einen zusammenhängenden Schulter- und Kopfbereich (6) aufweist, der im Vorderbereich der Rückenlehne (4) die Auflagefläche für die Schulter und den Kopf einer auf dem Sitz (1) sitzenden Person bildet, wobei das untere Ende dieses Schulter- und Kopfbereichs (6) im mittleren Abschnitt der Rückenlehne (4) an deren steifen Rahmen (5) schwenkbar angebracht ist,
**dadurch gekennzeichnet, dass**
eine Gurtumlenkung (7) seitlich am steifen Rahmen (5) der Rückenlehne (4) angebracht ist und der Fahrzeugsitz (1) Mittel zur Begrenzung der Schwenkbewegung des Schulter- und Kopfbereiches (6) des Sitzes sowohl in Vorwärtsrichtung als auch in Rückwärtsrichtung aufweist.

2. Fahrzeugsitz (1) Anspruch 1,
**dadurch gekennzeichnet, dass**
der schwenkbare Schulter- und Kopfbereich (6) Seitenteile (6.1) aufweist, wobei die Gurtumlenkung (7) mittels zumindest eines Befestigungsstifts (7.1) am Seitenbereich des steifen Rahmens (5) der Rückenlehne (4) angebracht ist, und wobei zumindest an dem Seitenteil (6.1), das der Gurtumlenkung (7) benachbart liegt, zumindest eine entsprechende Durchgangsöffnung (6.2) für die Befestigungsstifte (7.1) vorgesehen ist, um die Schwenkbewegung des Schulter- und Kopfbereichs (6) des Sitzes (1) zu erlauben.

3. Fahrzeugsitz (1) gemäß Anspruch 1,
**dadurch gekennzeichnet, dass**
der schwenkbare Schulter- und Kopfbereich (6) Seitenteile (6.1) aufweist, wobei die Gurtumlenkung (7) mittels zumindest eines U-förmigen Teils, dessen offener Bereich in Vorwärtsrichtung des Sitzes (1) gerichtet ist, derart am Rücken- und/oder Seitenbereich des steifen Rahmens (5) der Rückenlehne (4) angebracht ist, dass sie die Schwenkbewegung des Schulter- und Kopfbereichs (6) des Sitzes (1) erlaubt, indem die Seitenteile (6.1) des Schulter- und Kopfbereichs (6) frei im offenen Bereich der U-förmigen Teile beweglich sind.

4. Fahrzeugsitz (1) gemäß einem der vorhergehenden Ansprüche,
**dadurch gekennzeichnet, dass**
die Mittel zur Begrenzung der Schwenkbewegung zumindest einen am hinteren Bereich des Schulter- und Kopfbereichs befestigten Haltebügel (6.3) aufweisen, der einen am steifen Rahmen (5) der Rückenlehne (4) angebrachten Querbalken (5.1) umgreift, wobei bei vollständiger Schwenkung des Schulter- und Kopfbereichs (6) des Sitzes (1) in Rückwärtsrichtung dieser selbst an besagtem Querbalken (5.1) anschlägt, während bei vollständiger Schwenkung des Schulter- und Kopfbereichs (6) des Sitzes (1) in Vorwärtsrichtung die besagten Haltebügel (6.3) am Querbalken (5.1) anschlagen.

5. Fahrzeugsitz (1) gemäß einem der vorhergehenden Ansprüche,
**dadurch gekennzeichnet, dass**
die Mittel zur Begrenzung der Schwenkbewegung durch die an den Seitenteilen (6.1) des Schulter- und Kopfbereichs (6) geformten Durchgangsöffnungen (6.2) im Zusammenspiel mit den durch diese hindurchgehenden Befestigungsstiften (7.1) der Gurtumlenkung (7) gebildet werden.

6. Fahrzeugsitz (1) gemäß einem der vorhergehenden Ansprüche,
**dadurch gekennzeichnet, dass**
er eine Gurtaufrollvorrichtung (8) aufweist, welche im unteren, hinteren Bereich des Sitzes (1) befestigt ist.

7. Fahrzeugsitz (1) gemäß einem der Ansprüche 1 - 5,
**dadurch gekennzeichnet, dass**
er eine Gurtaufrollvorrichtung (8) aufweist, welche an einer B-Säule des den Sitz (1) beherbergenden Fahrzeugs befestigt ist.

## Claims

1. A vehicle seat (1) with a seat part (3) and a backrest (4), wherein the seat part (3) is displaceable substantially horizontally in the forward and rearward directions in order to adjust the position of the seat (1) with respect to a base frame (2) which is capable of being fastened to the vehicle containing the seat, and the backrest (4) is pivotable at the lower end thereof in order to be able to vary its steepness in a substantially vertical direction, the backrest (4) has a connected shoulder and head region (6) which in the front region of the backrest (4) forms the support face for the shoulder and the head of a person sitting on the seat (1), wherein the lower end of this shoulder and head region (6) is attached in a pivotable manner in the middle portion of the backrest (4) on the rigid frame (5) thereof, **characterized in that** a belt reversal means (7) is attached to the side of the rigid frame (5) of the backrest (4), and the vehicle seat (1) has means for limiting the pivoting movement of the shoulder and head region (6) of the seat both in the forward and in the rearward directions.

2. A vehicle seat (1) according to claim 1, **characterized in that** the pivotable shoulder and head region (6) has lateral parts (6.1), wherein the belt reversal means (7) is attached to the lateral region of the rigid frame (5) of the backrest (4) by means of at least one fastening pin (7.1), and wherein at least one corresponding through opening (6.2) for the fastening pins (7.1) is provided at least on the lateral part (6.1) which is situated adjacent to the
belt reversal means (7), in order to permit the pivoting movement of the shoulder and head region (6) of the seat (1).

3. A vehicle seat (1) according to claim 1, **characterized in that** the pivotable shoulder and head region (6) has lateral parts (6.1), wherein the belt reversal means (7) is attached in such a way to the back and/or lateral region of the rigid frame (5) of the backrest (4) by means of at least one U-shaped part, the open region of which is directed in the forward direction of the seat (1), that it permits the pivoting movement of the shoulder and head region (6) of the seat (1) by the lateral parts (6.1) of the shoulder and head region (6) being movably freely in the open region of the U-shaped parts.

4. A vehicle seat (1) according to any one of the preceding claims, **characterized in that** the means for limiting the pivoting movement have at least one holding yoke (6.3) which is fastened to the rear region of the shoulder and head region and which engages around a transverse member (5.1) attached to the rigid frame (5) of the backrest (4), wherein in the event of complete pivoting of the shoulder and head region (6) of the seat (1) in the rear direction the latter itself strikes against the aforesaid transverse member (5.1), whereas in the event of complete pivoting of the shoulder and head region (6) of the seat (1) in the forward direction the aforesaid holding yokes (6.3) strike against the transverse member (5.1).

5. A vehicle seat (1) according to any one of the preceding claims, **characterized in that** the means for limiting the pivoting movement are formed by the through openings (6.2) formed in the lateral parts (6.1) of the shoulder and head region (6) in cooperation with the fastening pins (7.1) of the belt reversal means (7) which pass through the latter.

6. A vehicle seat (1) according to any one of the preceding claims, **characterized in that** it has a belt-winding apparatus (8) which is fastened in the lower rear region of the seat (1).

7. A vehicle seat (1) according to any one of claims 1 to 5, **characterized in that** it has a belt-winding apparatus (8) which is fastened to a B-pillar of the vehicle containing the seat (1).

## Revendications

1. Siège de véhicule (1) avec une partie d'assise (3) et un dossier (4), dans lequel la partie d'assise (3) est déplaçable de manière sensiblement horizontale dans le sens avant et le sens arrière pour régler la position du siège (1) par rapport à un châssis de base (2) qui peut être fixé sur le véhicule hébergeant le siège et le dossier (4) est adapté pour pivoter à son extrémité inférieure pour ajuster sa déclivité dans une direction sensiblement verticale, le dossier (4) présente une zone d'épaules et de tête (6) assemblée qui, dans la zone avant du dossier (4), forme la surface d'appui pour les épaules et la tête d'une personne assise sur le siège (1), dans lequel l'extrémité inférieure de cette zone d'épaules et de tête (6) est montée à pivotement dans la section centrale du dossier (4) sur son châssis rigide (5),
**caractérisé en ce que**
un renvoi de ceinture (7) est installé latéralement sur le châssis rigide (5) du dossier (4) et le siège de véhicule (1) présente des moyens pour limiter le mouvement pivotant de la zone d'épaules et de tête (6) du siège, autant dans le sens avant que dans le sens arrière.

2. Siège de véhicule (1) selon la revendication 1,
**caractérisé en ce que**
la zone d'épaules et de tête (6) pivotante présente des parties latérales (6.1), dans lequel le renvoi de ceinture (7) est installé au moyen d'au moins d'une tige de fixation (7.1) dans la zone latérale du châssis rigide (5) du dossier (4) et dans lequel, au moins sur la partie latérale (6.1) qui est adjacente au renvoi de ceinture (7), au moins une ouverture de passage (6.2) correspondante est prévue pour les tiges de fixation (7.1) afin de permettre le mouvement pivotant de la zone d'épaules et de tête (6) du siège (1).

3. Siège de véhicule (1) selon la revendication 1,
**caractérisé en ce que**
la zone d'épaules et de tête (6) pivotante présente des parties latérales (6.1), dans lequel le renvoi de ceinture (7) est installé au moyen d'au moins une partie en forme de U, dont la zone ouverte est dirigée dans le sens avant du siège (1), sur la zone de dos et/ou la zone latérale du châssis rigide (5) du dossier (4) de manière à permettre le mouvement pivotant de la zone d'épaules et de tête (6) du siège (1) en déplaçant librement les parties latérales (6.1) de la zone d'épaules et de tête (6) dans la zone ouverte des parties en forme de U.

4. Siège de véhicule (1) selon l'une quelconque des revendications précédentes,
**caractérisé en ce que**
les moyens visant à limiter le mouvement pivotant présentent au moins un étrier de retenue (6.3) fixé sur la zone arrière de la zone d'épaules et de tête, qui s'engage autour d'une traverse (5.1) installée sur le châssis rigide (5) du dossier (4), dans lequel, lors du pivotement complet de la zone d'épaules et de tête (6) du siège (1) dans le sens arrière, celui-ci bute lui-même contre ladite traverse (5.1), tandis que, lors du pivotement complet de la zone d'épaules et de tête (6) du siège (1) dans le sens avant, lesdits étriers de retenue (6.3) butent sur la traverse (5.1).

5. Siège de véhicule (1) selon l'une quelconque des revendications précédentes,
**caractérisé en ce que**
les moyens visant à limiter le mouvement pivotant sont formés par les ouvertures de passage (6.2) formées sur les parties latérales (6.1) de la zone d'épaules et de tête (6) en combinaison avec les tiges de fixation (7.1) du renvoi de ceinture (7) qui les traversent.

6. Siège de véhicule (1) selon l'une quelconque des revendications précédentes,
**caractérisé en ce que**
il présente un enrouleur de ceinture (8) qui est fixé dans la zone inférieure arrière du siège (1).

7. Siège de véhicule (1) selon l'une quelconque des revendications 1 à 5, **caractérisé en ce que**
il présente un enrouleur de ceinture (8) qui est fixé sur une colonne B du véhicule hébergeant le siège (1).
